# FASCICULE DE BREVET EUROPEEN

(11) **EP 0 838 968 B1**
(45) Date de publication et mention de la délivrance du brevet: **29.01.2003**
(21) Numéro de dépôt: 97460041.3
(22) Date de dépôt: 08.10.1997
(51) Int. Cl.: H04Q 7/38, H04Q 11/04

(54) **Réseau local d'accès à des mobiles et un procédé d'aiguillage dans un tel réseau**
Lokales Netz mit Zugang zu mobilen Teilnehmern und Verfahren zur Leitweglenkung in solch einem Netz
Local access network to mobiles and a method of routing in such a network

(30) Priorité: 25.10.1996 FR 9613289
(43) Date de publication de la demande: 29.04.1998
(73) Titulaire: FRANCE TELECOM SA, 75015 Paris (FR)
(72) Inventeur: Quinquis, Jean-Paul, 22700 Perros-Guirec (FR); Roussel, Olivier, 22700 Perros-Guirec (FR)
(74) Mandataire: Maillet, Alain

(56) Documents cités:
- EP-A- 0 549 016
- EP-A- 0 679 042
- WO-A-94/01975
- VRIENDT DE J ET AL: "THE UMTS MOBILITY SERVER: A SOLUTION TO SUPPORT THIRD GENERATION MOBILITY IN ATM" INTERNATIONAL ZURICH SEMINAR ON DIGITAL COMMUNICATIONS INTELLIGENT NETWORKS AND THEIR APPLICATIONS, 21 février 1996, pages 251-262, XP000646127
- CHAI-KEONG TOH: "PERFORMANCE EVALUATION OF CROSSOVER SWITCH DISCOVERY ALGORITHMS FOR WIRELESS ATM LANS" PROCEEDINGS OF IEEE INFOCOM 1996. CONFERENCE ON COMPUTER COMMUNICATIONS, FIFTEENTH ANNUAL JOINT CONFERENCE OF THE IEEE COMPUTER AND COMMUNICATIONS SOCIETIES. NETWORKING THE NEXT GENERATION SAN FRANCISCO, MAR. 24 - 28, 1996, vol. 3, 24 mars 1996, INSTITUTE OF ELECTRICAL AND ELECTRONICS ENGINEERS, pages 1380-1387, XP000622276

## Description

La présente invention concerne un procédé d'aiguillage vers un équipement serveur de cellules émises par un module rattaché à un réseau local d'accès à des mobiles ainsi qu'un tel réseau pour la mise en oeuvre dudit procédé.

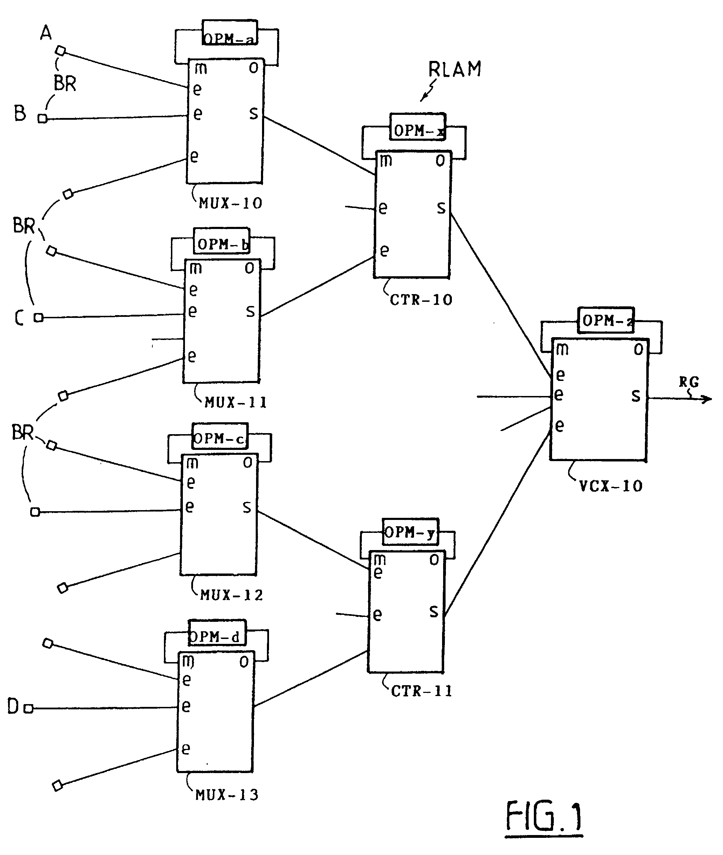

On a représenté à la Fig. 1 un réseau local d'accès à des mobiles RLAM auquel la présente invention peut s'appliquer. Ce réseau local est constitué d'une pluralité de bornes radio BR chacune reliée à une entrée d'un multiplexeur MUX-10 à MUX-13 ici au nombre de quatre. Chaque multiplexeur MUX-10 à MUX-13 a sa sortie qui est reliée à une entrée d'un concentrateur CTR-10, CTR-11 qui, dans le réseau représenté, sont au nombre de deux. Enfin, chaque concentrateur CTR-10, CTR-11 a sa sortie qui est reliée à un multiplex d'entrée d'un commutateur de circuits virtuels VCX-10 dont un multiplex de sortie est relié à un réseau général RG. Chaque élément du réseau local RLAM utilise la technique connue sous le nom d'ATM (Asynchronous Transfer Mode).

Un tel réseau qui est donné ici à titre d'exemple est un réseau qui est dit à trois niveaux de hiérarchie : niveau des multiplexeurs, niveau des concentrateurs, niveau du commutateur. On notera que la présente invention ne s'applique pas seulement à des réseaux à trois niveaux de hiérarchie mais également à des réseaux à deux ou plus de trois niveaux de hiérarchie.

Dans la présente description, on appellera étage de concentration aussi bien les multiplexeurs MUX que les concentrateurs CTR et que le ou les commutateurs de circuits virtuels VCX du réseau.

Dans la présente description, on dira qu'un mobile est rattaché à un réseau local RLAM lorsqu'il passe sous la couverture radio de l'une des bornes BR de à ce réseau. A titre indicatif, la couverture d'un tel réseau pourrait être celle d'une agglomération moyenne. Toujours à titre indicatif, plusieurs réseaux de ce type peuvent être juxtaposés pour accroître la zone géographique couverte. C'est ainsi qu'un réseau d'envergure régionale ou nationale devrait regrouper un nombre plus ou moins important de réseaux locaux d'accès RLAM.

Dans ce type de réseau d'accès, les communications sont gérées dans le commutateur VCX. Elles peuvent être locales lorsqu'elles sont établies entre des mobiles rattachés au réseau local RLAM considéré mais elles peuvent être aussi sortantes lorsqu'elles sont établies entre des mobiles rattachés au réseau RLAM considéré et tout équipement terminal du réseau général RG. Pendant toute sa durée, une communication est identifiée dans le réseau local par un même couple d'idendificateurs de conduits virtuels et de canaux virtuels VPI/VCI et ceci même lorsque les connexions sont modifiées consécutivement aux déplacements du mobile considéré.

Dans un tel réseau, un mobile qui est déjà en communication et qui se trouve donc rattaché à une des bornes BR peut soudainement, lorsqu'il se déplace, se trouver sous la couverture d'une deuxième borne radio BR et être ainsi momentanément rattaché à deux bornes BR. On dit alors que ce mobile est dans une phase de "handover inter-cellulaires". Dans cette phase, si les liens de trafic usager sont tous établis vers les deux bornes et des deux bornes vers le commutateur, les informations qui sont émises par le mobile sont reçues simultanément par les bornes BR auxquelles il est rattaché puis transmises dans le réseau local. Le mobile lui-même reçoit des informations provenant simultanément desdites bornes BR.

Afin de ne pas encombrer le réseau RLAM inutilement, il est connu d'utiliser un équipement qui a pour fonction de filtrer les flux issus d'un même mobile en phase de hand-over et de n'en conserver qu'un seul, généralement celui qui présente la qualité la meilleure. Le flux filtré est alors délivré sur le réseau. En réalité, cet équipement agit généralement au niveau des cellules ATM si bien que peuvent être retenues par l'opération de macrodiversité, en fonction de la qualité de la réception radio, alternativement ou pas des cellules ATM provenant respectivement de bornes différentes.

On précise que lorsqu'un mobile est sous la couverture de plusieurs bornes les liaisons radio sont généralement de qualités très inégales.

Cet équipement est dit équipement serveur de macrodiversité OPM et sa fonction de filtrage est appelée macrodiversité.

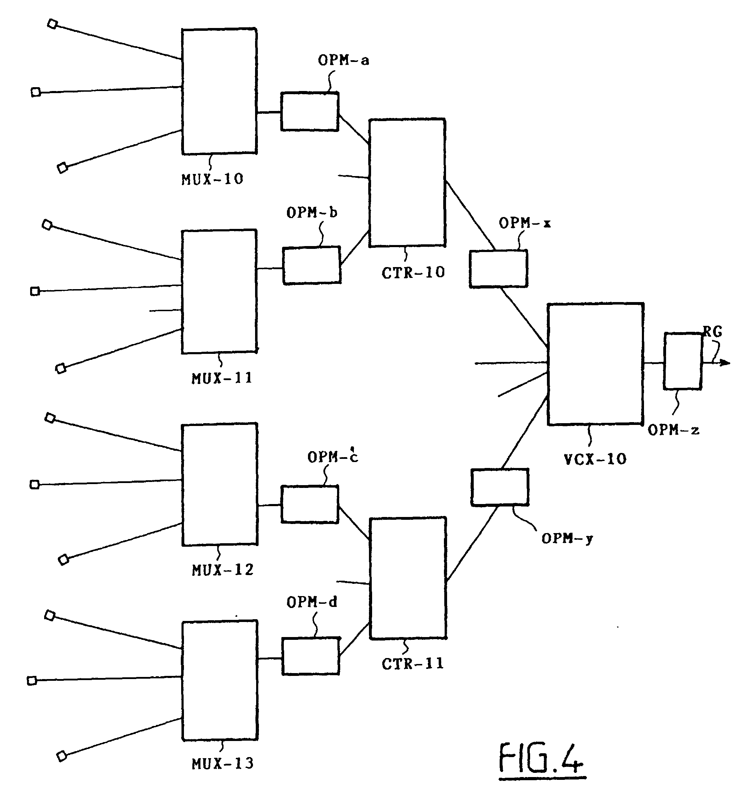

Dans un réseau local, un équipement serveur OPM peut être vu comme un serveur OPM ou comme une entité de commutation. Dans le premier cas, il est raccordé à un étage de concentration, tel qu'un multiplexeur, un équipement de concentration ou un commutateur de manière qu'il soit placé en dérivation, comme cela est représenté à la Fig. 1 alors que dans le second cas, il est placé en coupure d'un multiplex d'accès à un concentrateur ou à un commutateur, comme cela est représenté à la Fig. 4.

Le document EP-A-679042 décrit une méthode de gestion de macrodiversité dans un réseau d'accès ATM pour la téléphonie mobile.

La présente invention s'applique aux deux types d'équipement serveur OPM.

Un réseau d'accès à des mobiles RLAM doit être équipé d'au moins un équipement serveur OPM localisé sur l'accès au réseau général RG, c'est-à-dire au niveau du commutateur principal VCX du réseau local, ceci afin que l'opération de macrodiversité puisse être effectuée sur des flux provenant de n'importe quelle borne du réseau RLAM. Cependant, pour des raisons d'efficacité et d'optimisation de l'occupation des ressources dans le réseau local, il peut être opportun de placer un équipement serveur OPM à divers étages de concentration, voire à chaque étage de concentration.

En effet, dans un réseau à plusieurs niveaux hiérarchiques comme il a été décrit précédemment, un équipement serveur OPM placé au niveau hiérarchique inférieur permet de filtrer les flux d'un mobile qui serait en phase de handover sur deux bornes connectées au même étage de concentration présent à ce point. De même, un équipement serveur OPM placé sur un étage de concentration de niveau supérieur permet de filtrer les flux d'un mobile rattaché sur deux bornes connectées à tous les étages de concentration de niveau juste inférieur.

Les séquences d'événements qui sont généralement déroulées pendant une phase de handover intercellulaire avec macrodiversité sont les suivantes. Le trafic passe jusque là par la première borne dite borne A. Le mobile en communication rattaché à ladite borne A constate que la qualité de la liaison radio est meilleure sur une autre borne B. Il établit alors un canal de signalisation dans le réseau local RLAM sur cette nouvelle borne B. Il y a ensuite transfert, de la borne A vers la borne B, du contexte de la liaison, c'est-à-dire des informations concernant les supports radio et ATM et le service acheminé. Un canal usager est alors établi dans le réseau local sur la borne B avec pour conséquence que le trafic du mobile transite à la fois par les bornes A et B. C'est le début de la phase de macrodiversité. Lorsque la borne coupe le trafic, c'est la fin de cette phase. Les canaux usager et de signalisation sur la borne A sont alors déconnectés.

Le but de la présente invention est de proposer, dans ce contexte, un procédé d'aiguillage des cellules émises par un mobile vers un équipement serveur OPM pour une connexion virtuelle donnée.

Une solution simple pour résoudre le problème de l'aiguillage vers un équipement serveur OPM serait de considérer qu'il est toujours en service. Ainsi, tout le trafic usager transite à travers l'équipement serveur OPM à charge pour celui-ci de faire le tri entre les connexions à traiter en macrodiversité et celles qu'il convient de laisser passer parce qu'elles ne sont pas en phase de hand-over. Plusieurs inconvénients motivent le rejet de cette approche. D'abord, il y a l'accroissement de la complexité de l'équipement serveur OPM qui voit passer toutes les communications en cours et qui doit être capable de gérer un nombre important de contextes. Il en résulte un coût plus important du système, notamment par l'utilisation d'un nombre important d'éléments de mémorisation. Ensuite, cette architecture est plus sensible aux pannes et une défaillance de l'équipement serveur OPM a pour conséquence que toutes les communications sont rompues, qu'elles soient ou non en phase de hand-over. Enfin, cette architecture nécessite que l'équipement serveur OPM soit placé en entité de commutation, ce qui peut poser des problèmes, notamment de compléxité du système.

Différentes autres solutions sont envisageables. Elles sont généralement classées en deux catégories. Dans l'une, l'autorisation d'accès à un équipement serveur OPM est commandée par les bornes en utilisant un protocole spécifique. Dans l'autre, cette autorisation est implicite et elle est contenue dans l'en-tête des cellules de trafic elles-mêmes. La présente invention considère une autorisation qui est contenue dans l'en-tête des cellules de trafic.

Le procédé d'aiguillage selon l'invention est caractérisé en ce qu'il consiste à établir initialement des canaux virtuels permanents en direction des équipements serveurs et, lorsqu'un mobile se trouve rattaché à deux bornes dudit réseau, lesdites deux bornes déterminent l'équipement serveur commun le plus proche et modifient l'entête des cellules usager émises par ledit mobile de manière à ce qu'elles portent l'identificateur VPI/VCI du canal établi pour ledit équipement serveur de manière à pouvoir y être traitées, ledit équipement traduisant de nouveau l'identificateur VPI des cellules du flux conservé de manière qu'il soit égal à celui affecté aux cellules usager.

Lesdits équipements serveurs sont par exemple respectivement reliés en dérivation sur des étages de concentration. Le procédé de l'invention consiste alors à établir initialement lesdits canaux virtuels permanents vers les équipements serveurs dans les étages de concentration auxquels sont reliés lesdits équipements serveurs.

Mais, lesdits équipements serveurs peuvent être respectivement reliés en coupure des multiplex en sortie d'étages de concentration. Le procédé de l'invention est alors caractérisé en ce qu'il consiste à établir initialement, dans chacun desdits équipements serveurs, un canal virtuel permanent vers une unité fonctionnelle dudit équipement serveur et, lorsque ledit mobile se trouve rattaché à deux bornes dudit réseau, lesdites deux bornes déterminent l'équipement serveur commun le plus proche et modifient l'en-tête des cellules de manière à ce qu'elles portent l'identificateur VPI/VCI du canal établi vers ladite unité fonctionnelle dudit équipement serveur.

Avantageusement, le procédé de l'invention consiste à établir un canal virtuel à chacun desdits niveaux hiérarchiques desdits étages de concentration auxquels sont reliés lesdits équipements serveurs.

Selon une autre caractéristique de l'invention, pour déterminer l'équipement serveur commun le plus proche, chaque borne à laquelle est rattaché ledit mobile échange des informations de dialogue avec l'autre borne, lesdites informations étant relatives à la localisation relative desdites deux bornes dans ledit réseau local. Chaque borne à laquelle est rattaché ledit mobile utilise, dans un mode de réalisation de l'invention, une table pour déterminer, à partir des informations relatives à la localisation desdites deux bornes, l'équipement serveur le plus proche.

Selon un autre mode de réalisation de l'invention, chaque borne émet lesdites informations de dialogue en direction de l'autre borne sur un canal de signalisation permanent qui lui est spécifique, ladite autre borne déterminant la localisation de ladite borne en considérant l'identificateur dudit canal porté par les cellules émises par ladite borne. Avantageusement, le canal de signalisation permanent associé à chaque borne pour l'émission desdites informations de dialogue porte un identificateur constitué d'un code à N- 1 mots, N étant le nombre des niveaux de hiérarchie des étages de concentration du réseau, le J^{ième} mot différentiant chaque étage de concentration de niveau J relié à un même étage de concentration de niveau J + 1.

Pour déterminer l'équipement serveur le plus proche, chaque borne compare l'identificateur du canal de signalisation qui lui est attribué et l'identificateur du canal de signalisation sur lequel elle a reçu lesdites informations de l'autre borne, détermine le mot qui les différentie et si celui-ci est le n^{ième}, détermine l'équipement serveur le plus proche comme étant celui qui est lié à l'étage de concentration de niveau n + 1.

Selon une autre caractéristique de l'invention, à partir du moment où le mobile est rattaché à deux bornes jusqu'au moment où il est de nouveau rattaché à une seule borne, ledit mobile insère dans l'entête des cellules usager qu'il émet un indicateur, et lesdites bornes auxquelles il est rattaché modifient l'en-tête desdites cellules seulement lorsque lesdites cellules portent ledit indicateur. Avantageusement, l'ancienne borne modifie l'en-tête desdites cellules seulement dès lors qu'elle a reçu de la nouvelle borne le message concernant lesdites informations de dialogue. De même, la nouvelle borne modifie l'en-tête desdites cellules seulement dès lors que la connexion sur elle aura été effectuée.

La présente invention concerne également un réseau local qui permet la mise en oeuvre du procédé qui est précédemment décrit. Pour ce faire, ledit réseau local d'accès à des mobiles est du type qui est constitué d'une pluralité d'étages de concentration et de bornes reliées aux étages de concentration de bas niveau de hiérarchie, ledit réseau comportant des équipements serveurs respectivement reliés à des étages de concentration, ledit réseau comportant des moyens pour aiguiller vers un équipement serveur les cellules qui sont émises par un mobile lorsque celui-ci se trouve rattaché à deux bornes.

Lesdits équipements serveurs sont prévus pour filtrés les flux de cellules issus dudit mobile via respectivement lesdites deux bornes et n'en conserver qu'un seul.

Un réseau selon l'invention est caractérisé en ce qu'il comporte des moyens pour établir initialement des canaux virtuels permanents en direction des équipements serveurs et des moyens pour que lesdites deux bornes puissent déterminer, lorsqu'un mobile se trouve rattaché à deux bornes dudit réseau, l'équipement serveur commun le plus proche et pour modifier l'en-tête des cellules usager émises par ledit mobile de manière à ce qu'elles portent l'identificateur VPI/VCI du canal établi pour ledit équipement serveur de manière à pouvoir y être traitée, lesdits équipements étant prévus pour traduire l'identificateur VPI des cellules du flux conservé de manière qu'il soit égal à celui affecté aux cellules usager.

Par exemple, lesdits équipements serveurs sont respectivement reliés en dérivation sur des étages de concentration. Ledit réseau est alors prévu pour établir initialement lesdits canaux virtuels permanents vers les équipements serveurs dans les étages de concentration auxquels ces derniers sont reliés.

Mais, lesdits équipements serveurs peuvent être respectivement reliés en coupure des multiplex en sortie d'étages de concentration. Ledit réseau comporte alors des moyens pour établir initialement, dans chacun desdits équipements serveurs, un canal virtuel permanent vers une unité fonctionnelle dudit équipement serveur et des moyens pour déterminer, lorsque ledit mobile se trouve rattaché à deux bornes dudit réseau, l'équipement serveur commun le plus proche et pour modifier l'en-tête des cellules de manière à ce qu'elles portent l'identificateur VPI/VCI du canal établi vers ladite unité fonctionnelle dudit équipement serveur.

Selon une autre caractéristique de l'invention, chaque borne est prévue pour échanger avec toute autre borne dudit réseau des informations de dialogue relatives à la localisation relative desdites deux bornes dans ledit réseau local.

Selon un premier mode de réalisation, chaque borne est pourvue d'une table pour pouvoir déterminer, à partir desdites informations reçues d'une autre borne, l'équipement serveur le plus proche.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est un schéma synoptique d'un réseau pour lequel le procédé de l'invention peut s'appliquer,
la Fig. 2 est un schéma d'un réseau illustrant l'attribution des identificateurs de canaux de signalisation aux différents étages de concentration d'un réseau à trois niveaux hiérarchique,
la Fig. 3 est un schéma d'un équipement serveur qui est destiné à être utilisé en coupure d'un multiplex, et
la Fig. 4 est une variante de réalisation d'un réseau selon l'invention.

Si on se réfère au réseau à trois niveaux hiérarchiques de la Fig. 1, trois cas peuvent se présenter en phase de macrodiversité.

Dans le premier cas, le mobile est sous la couverture des bornes A et B qui sont toutes les deux connectées au multiplexeur MUX-10. L'équipement serveur OPM commun le plus proche est l'équipement serveur OPM-a qui se trouve au niveau hiérarchique le plus bas. Les cellules ATM du flux usager émises sur chacune de ces bornes A et B devront donc être aiguillées, en phase de hand-over, sur l'équipement serveur OPM-a. Pour ce faire, lesdites cellules porteront le couple d'identificateurs VPI/VCI qui permettra cet aiguillage dans l'étage de concentration auquel est relié ledit équipement serveur OPM. Ensuite, les cellules filtrées par l'équipement serveur OPM traverseront le réseau jusqu'au commutateur VCX-10 sans aucun transit dans d'autres équipements serveurs OPM, en particulier les équipements serveurs OPM-x et OPM-z.

Dans le second cas, le mobile est sous la couverture à la fois des bornes A et C. L'équipement serveur OPM commun le plus proche est alors l'équipement serveur OPM-x au niveau hiérarchique intermédiaire. Les cellules émises par la borne A traverseront directement le MUX-10 sans passer par l'équipement serveur OPM-a et les cellules émises par la borne C traverseront directement le MUX-11 sans passer par l'équipement serveur OPM-b. En revanche les cellules provenant des bornes A et C seront, dans le concentrateur CTR-10, aiguillées vers l'équipement serveur OPM-x. Le flux unique résultant traversera le VCX-10 sans passer par l'équipement serveur OPM-z.

Dans le troisième cas, le mobile est sous la couverture des bornes A et D. L'équipement serveur OPM commun le plus proche est alors l'équipement serveur OPM-z. Les cellules émises par les deux bornes A et D ne transiteront que par cet équipement serveur OPM-z.

On notera que, dans cet exemple où le réseau est à trois niveaux hiérarchiques, il est nécessaire de disposer de quatre identificateurs de canaux et de circuits VPI/VCI pour aiguiller l'ensemble des cellules qui peuvent être émises. Pour les différencier, il suffit que les identificateurs de circuits VCI ou les identificateurs de canaux VPI soient différents. Si l'on considère que l'identificateur de circuits VCI dont on rappelle que la valeur est généralement allouée au cours de la phase d'établissement de l'appel, est constant pendant toute la durée de la communication considérée, par exemple VCI = 100, l'identificateur de canaux VPI prendra quatre valeurs distinctes :
- une première valeur, par exemple VPI = 50, pour les cellules qui sont destinées à traverser le réseau sans macrodiversité, c'est-à-dire sans transiter dans un quelconque équipement serveur OPM. Le couple d'identificateurs VPI = 50, VCI = 100 est par conséquent celui qui est en service pour acheminer les cellules ATM dans le RLAM en dehors des situations de macrodiversité,
- une seconde valeur, par exemple VPI = 60, pour les cellules qui sont destinées à être traitées dans un équipement serveur OPM de premier niveau hiérarchique,
- une troisième valeur, par exemple VPI = 70, pour les cellules qui sont destinées à être traitées dans un équipement serveur OPM de second niveau hiérarchique, et
- une quatrième valeur, par exemple VPI = 80, pour les cellules qui sont destinées à être traitées dans un équipement serveur OPM du troisième niveau hiérarchique.

De manière générale, il est nécessaire de disposer de N + 1 couples d'identificateurs de canaux et de circuits VPI/VCI pour un réseau qui comporterait N niveaux hiérarchiques. Une valeur différente est allouée à chaque niveau hiérarchique et une autre valeur est allouée aux cellules qui sont destinées à traverser le réseau sans transiter par un équipement serveur OPM.

Selon une caractéristique de l'invention, les N + 1 valeurs d'identificateurs VPI sont les mêmes pour toutes les communications établies dans le réseau local. Il s'est avéré que cette condition ne représentait pas une contrainte pour la gestion des communications dans un RLAM.

Ainsi, le procédé de l'invention nécessite une configuration initiale du réseau qui est effectuée à sa mise en service ou, éventuellement, à la suite de modifications de son architecture physique. Cette configuration consiste à construire tous les canaux permanents qui permettront à tous les mobiles de pouvoir accéder à l'équipement serveur OPM correct lorsque cela sera nécessaire. Cette construction est réalisée en effectuant des marquages à chaque étage de concentration.

Si l'on se réfère au réseau à trois niveaux hiérarchiques représenté à la Fig. 1, les connexions permanentes à établir au niveau de chaque étage de concentration sont décrites ci-dessous.

Dans les multiplexeurs MUX-10, 11, 12 et 13, seront effectués les marquages de toutes les entrées e d'un multiplexeur vers sa sortie s pour les couples d'identificateurs de canaux et de circuits virtuels VPI/VCI où l'identificateur VPI correspond soit à l'identificateur VPI alloué à l'équipement serveur OPM de second niveau hiérarchique, ici VPI = 70, soit à l'identificateur VPI alloué à l'équipement serveur OPM de troisième niveau, ici VPI = 80.

Les couples d'identicateurs VPI/VCI correspondant sont traduits par les mêmes couples respectifs. Ainsi, les couples 70/x et 80/x dans l'exemple mentionné ci-dessus, où le second nombre x représente toutes les valeurs que peut prendre l'identificateur de circuits virtuels VCI, c'est-à-dire toutes les valeurs qui peuvent être allouées à n'importe quelle communication, sont respectivement traduits en 70/x et 80/x.

Seront également effectués les marquages de toutes les entrées e d'un multiplexeur vers sa sortie o reliée à l'équipement serveur OPM, pour les couples d'identificateurs VPI/VCI où l'identificateur VPI est celui qui est alloué à l'équipement serveur OPM de premier niveau, ici VPI = 60. Là, le couple d'identificateurs correspondant, ici 60/x, est traduit en un couple VPI/VCI où l'identificateur VPI est celui qui est alloué aux cellules qui ne sont pas en phase de macrodiversité, ici 50/x.

On notera que, du fait de cette traduction, les cellules quitteront le multiplexeur de bas niveau hiérarchique avec un en-tête qui ne les aiguillera plus vers un autre équipement serveur OPM et qu'il en sera ainsi à tous les étages du réseau.

Sera encore effectué le marquage de l'entrée m d'un multiplexeur à laquelle est reliée la sortie de l'équipement serveur OPM vers la sortie s de ce multiplexeur pour le couple d'identificateurs VPI/VCI où l'identificateur VPI est celui qui est normalement affecté aux cellules qui ne sont pas en phase de macrodiversité, ici 50/x. Ce couple d'identificateurs est traduit en lui-même, c'est-à-dire 50/x.

De même, dans les concentrateurs CTR-10 et 11, seront effectués les marquages de toutes les entrées e d'un concentrateur vers sa sortie s pour le couple d'identificateurs VPI/VCI correspondant à l'équipement serveur OPM de troisième niveau, ici 80/x. Celui-ci est traduit en lui-même, c'est-à-dire 80/x.

Seront également effectués les marquages de toutes les entrées vers la sortie o sur laquelle est relié l'équipement serveur OPM de second niveau et ce pour le couple d'identificateurs correspondant à l'équipement serveur OPM de second niveau, ici 70/x. Ce couple d'identificateurs est traduit en le couple d'identificateurs donné aux cellules ne devant pas transiter par un équipement serveur OPM, c'est-à-dire ici 50/x.

Est également effectué le marquage de l'entrée m sur laquelle est reliée la sortie de l'équipement serveur OPM de second niveau vers la sortie s pour le couple d'identificateurs correspondant aux cellules qui ne sont pas en phase de macrodiversité. Ce couple d'identificateurs, ici 50/x, est traduit en lui-même, c'est-à-dire en 50/x.

Enfin, dans le commutateur VCX-10, sont effectués les marquages de toutes les entrées e vers la sortie o sur laquelle est reliée l'entrée de l'équipement serveur OPM de troisième niveau, et ce pour le couple d'identificateurs dont l'identificateur VPI est celui qui est alloué au troisième niveau, ici 80/x. Ce couple est traduit en le couple d'identificateurs donné aux cellules ne devant pas transiter par un équipement serveur OPM, c'est-à-dire ici 50/x.

De même, toujours dans le commutateur VCX-10, l'entrée m à laquelle est reliée la sortie de l'équipement serveur OPM est marquée pour le couple d'identificateurs donné aux cellules ne devant pas transiter par un équipement serveur OPM, ici 50/x. Ce couple d'identificateurs est traduit en lui-même, c'est-à-dire 50/x.

On notera qu'une reconfiguration du réseau consécutive par exemple à l'ajout d'un nouvel étage de multiplexage nécessiterait d'établir les canaux permanents décrits ci-dessus dans ce nouveau multiplexeur.

On va maintenant décrire le déroulement des opérations pour une communication effectuée dans le réseau à trois niveaux de hiérarchie décrit ci-dessus et en considérant les exemples de marquages également décrits ci-dessus.

Dans un premier temps, on va considérer la phase d'établissement de l'appel. On rappelle que la valeur de l'identificateur VCI qui est allouée à une communication donnée est constant pendant toute la durée de l'appel et que par hypothèse elle garde également cette valeur dans tout le réseau local, depuis la borne A sur laquelle le mobile est rattaché jusqu'à l'élément de concentration de niveau hiérarchique le plus élevé, à savoir le commutateur VCX-10.

Pour rendre la description claire, on va considérer, à titre seulement d'exemple, qu'à la communication est alloué un identificateur VCI de valeur 100.

Comme il est classique dans le domaine de la présente invention, la phase d'établissement d'appel consiste à marquer une connexion virtuelle dans les différents étages de concentration de la borne A sur laquelle est rattaché le mobile jusqu'à une sortie du commutateur VCX-10. Cette connexion portera, dans l'exemple considéré ici, les identificateurs de canaux virtuels VPI = 50, et de circuits virtuels VCI = 100. On rappelle que par l'hypothèse, l'identificateur VPI = 50 est attribué aux cellules qui ne doivent pas traverser un équipement serveur OPM, c'est-à-dire les cellules qui ne sont pas en phase de macrodiversité.

Par exemple, une communication d'un mobile rattaché à la borne A vers le réseau général RG nécessite les opérations de marquage consistant, d'une entrée e vers la sortie s de chacun des étages de concentration MUX-10, CTR-10 et VCX-10, en la traduction de 50/100 en 50/100.

On va supposer maintenant que le mobile passe sous la couverture d'une autre borne C. La communication passe donc temporairement en phase de hand-over entre les bornes A et C.

Un canal de signalisation et un canal de trafic usager vont alors être marqués à partir de la borne C. Le canal de signalisation va permettre au mobile de dialoguer avec le réseau alors que le canal d'usager lui permettra d'acheminer son trafic usager à partir de la nouvelle borne C. L'objet du dialogue est de communiquer la valeur de l'identificateur de circuits virtuels VCI (dans notre exemple 100) affectée à la communication et également de fournir au mobile la localisation relative de la nouvelle borne C par rapport à l'ancienne A. Comme on le comprendra par la suite, cette dernière information sera exploitée pour déterminer la valeur de l'identificateur de canaux virtuels VPI qui devra être affectée à la communication pour permettre aux cellules usager de transiter, pendant la phase de macrodiversité, dans l'équipement serveur OPM commun le plus proche. La valeur de l'identificateur VCI du trafic usager est quant à elle celle qui est affectée à la communication.

Au terme du dialogue, les marquages suivants sont effectués à partir de la borne C.

Dans le multiplexeur MUX-11, le marquage de l'entrée e qui est reliée à la borne C vers la sortie s est effectuée pour l'identificateur VPI correspondant à l'identificateur utilisé pour les cellules qui ne sont pas en phase de macrodiversité, soit 50. De même, dans le concentrateur CTR-10, le marquage de l'entrée e qui est reliée au multiplexeur MUX-11 vers la sortie s est effectué pour le même identificateur VPI = 50. Par contre, aucun nouveau marquage n'est effectué dans le commutateur VCX-10.

Pendant la phase de macrodiversité, un indicateur M est inséré par le mobile dans l'en-tête des cellules du flux usager. Il a pour fonction de signifier aux bornes radio réceptrices BR qu'elles devront modifier l'en-tête des cellules ATM, c'est-à-dire plus précisément les contenus des identificateurs de canaux et de circuits virtuels VPI/VCI, afin que lesdites cellules soient déroutées de leur chemin normal dans le réseau pour être aiguillées vers l'équipement serveur OPM commun le plus proche.

Ainsi, après qu'elles aient traversé l'une ou l'autre des bornes A et C, les cellules du flux usager devront porter un identificateur VPI dont la valeur est celle qui est affectée à l'équipement serveur OPM commun le PLUS proche afin de pouvoir y transiter. On comprendra que dans l'exemple qui est donné ci-dessus, l'identificateur VPI à choisir est celui qui est affecté aux étages de concentration de second niveau, c'est-à-dire 70.

Le problème qui se pose est celui qui consiste pour les bornes A et C à connaître l'identificateur VPI qui sera utilisé pour aiguiller les cellules de la communication considérée vers l'équipement serveur OPM commun le plus proche.

Selon une première solution à ce problème particulier, une table localisée dans chaque borne décrit la topologie du réseau et est exploitée par ces dernières pour déterminer l'équipement serveur OPM commun à viser. Connaissant l'identité physique des multiplexeurs sur lequel chacune est connectée, c'est-à-dire le multiplexeur MUX-10 pour la borne A et le multiplexeur MUX-11 pour la borne C, chacune des deux bornes A et C peut en déduire l'étage de concentration commun le plus proche sur lequel est connecté un équipement serveur OPM. Cette solution nécessite l'utilisation de tables réparties qui peuvent être relativement fastidieuses à mettre à jour.

Une autre solution est également proposée par la présente invention.

Elle consiste à construire plusieurs canaux communs portant des identificateurs de canaux virtuels VPI spécifiques des équipements de concentration de plus bas niveau de hiérarchie, ici les multiplexeurs MUX-10 à MUX-13, lesdits canaux étant utilisés par chaque borne du réseau pour effectuer le dialogue avec une autre borne mentionnée ci-dessus. Les cellules de message transportées par ces canaux portent l'identificateur VPI réservé à l'équipement de concentration auquel est rattachée la borne émettant ladite cellule et l'identificateur VCI réservé au canal de signalisation affecté au mobile. Ainsi, pour une borne, la comparaison entre l'identificateur de canal VPI qui est affecté à l'étage de concentration auquel elle est connectée et celui qui est affecté au message de dialogue qu'elle reçoit d'une autre borne lui permet d'en déduire le niveau hiérarchique de l'équipement serveur OPM commun à adresser.

Par exemple, l'identificateur VPI = 000 est affecté au canal commun qu'utilisent les bornes connectées sur le multiplexeur MUX-10, l'identificateur VPI = 001 est affecté au multiplexeur MUX-11, l'identificateur VPI = 010 est affecté au multiplexeur MUX-12, l'identificateur VPI = 011 est affecté au multiplexeur MUX-13. Pour la borne A, la comparaison entre l'identificateur VPI = 000 qui est affecté au multiplexeur MUX-10 auquel elle est connectée et l'identificateur VPI = 001 affecté au message de dialogue qu'elle reçoit de la borne C reliée au multiplexeur MUX-11, permet de déduire que l'étage de concentration le plus proche commun est le concentrateur CTR-10.

Considérons d'autres exemples.

Cas 1 : la borne B, qui est connectée au multiplexeur MUX-10 auquel on a affecté l'identificateur VPI = 000, reçoit un message de dialogue avec l'identificateur VPI = 000. Elle peut donc en déduire que la borne source est connectée sur le même multiplexeur MUX-10 et que l'équipement serveur OPM commun le plus proche est l'équipement serveur OPM-a. En conséquence, l'identificateur VPI à utiliser pour les cellules usager pendant la phase de macrodiversité est l'identificateur de conduit virtuel affecté aux étages de concentration de bas niveau, c'est-à-dire dans le cas de l'exemple mentionné ci-dessus, l'identificateur VPI = 60.

On notera que la même valeur d'identificateur VPI = 60 serait donnée lorsque les deux bornes dialoguant sont connectées sur le même multiplexeur, par exemple MUX-11, MUX-12 et MUX-13. Ainsi, l'égalité des identificateurs VPI de dialogue signifie que les cellules usager doivent porter l'identificateur VPI = 60 et que l'équipement serveur OPM commun visé est au niveau hiérarchique le plus bas.

Cas 2 : la borne C, qui est connectée au multiplexeur MUX-11 auquel on a affecté l'identificateur VPI = 001, reçoit un message de dialogue avec l'identificateur VPI = 000. Elle peut donc en déduire que la borne source dudit message est connectée sur le multiplexeur MUX-10 et ainsi que l'étage de concentration le plus proche commun est le concentrateur de second niveau hiérarchique, c'est-à-dire ici le concentrateur CTR-10. Ainsi, l'identificateur VPI affecté aux cellules usager pendant la phase de macrodiversité est l'identificateur affecté aux étages de concentration de second niveau hiérarchique, c'est-à-dire dans le cas mentionné ci-dessus, l'identificateur VPI = 70. Les cellules usager portant cet identificateur seront alors aiguillées vers l'équipement serveur OPM le plus proche commun qui est donc l'équipement serveur OPM-x.

Cas 3: la borne D, qui est connectée au multiplexeur MUX-13 auquel on a affecté l'identificateur VPI = 010, reçoit un message avec l'identificateur VPI = 000. Elle peut déterminer l'identificateur VPI affecté aux cellules usager pendant la phase de macrodiversité qui devra être l'identificateur affecté aux étages de concentration de troisième niveau hiérarchique, c'est-à-dire dans le cas mentionné ci-dessus, l'identificateur VPI = 80. Il en serait de même si la borne D avait reçu un message portant l'identificateur VPI = 000. Ainsi, les cellules usager portant cet identificateur seront alors aiguillées vers l'équipement serveur OPM le plus proche commun qui est donc l'équipement serveur OPM-z relié au commutateur VCX-10.

Cas 4 : la borne A reçoit un message avec l'identificateur VPI = 010. Comme précédemment, les cellules usager porteront pendant la phase de macrodiversité un identificateur VPI = 80.

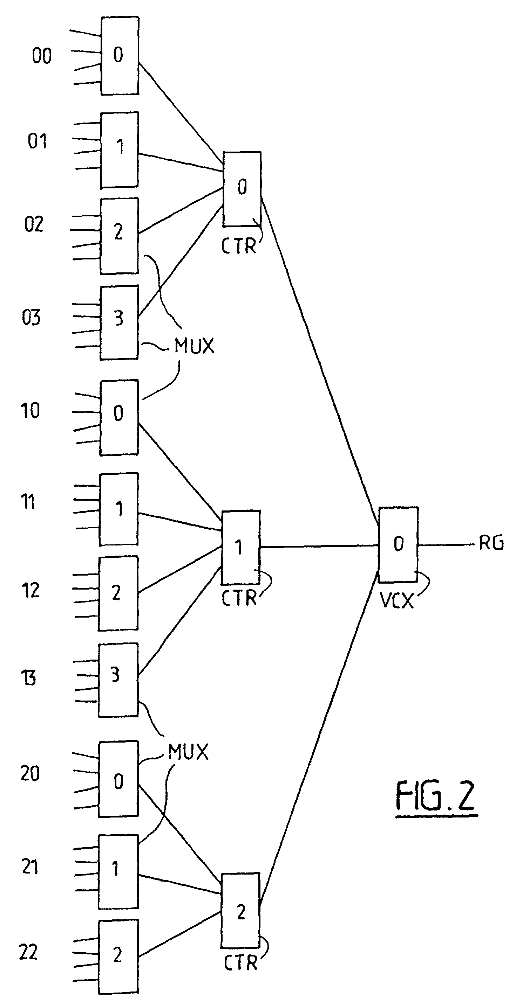

La présente invention propose d'allouer les identificateurs de canaux virtuels VPI des canaux de dialogue communs de la manière suivante qui est décrite en relation avec la Fig. 2 pour un réseau à trois niveaux de hiérarchie.

Pour un tel réseau à trois niveaux, chaque identificateur VPI est un code à deux chiffres : le premier représente un numéro qui différentie chaque étage de concentration de premier niveau relié à un même étage de concentration de second niveau et le second représente un numéro qui différentie chaque étage de concentration de second niveau relié à un même étage de concentration de troisième niveau.

On notera que les chiffres dont il est question ici peuvent être des chiffres exprimés en base 10, mais également en toute autre base. De manière générale, il s'agit de mots qui permettent de différentier chaque étage de concentration qui est d'un niveau de hiérarchie donné et qui est relié à un même étage de concentration d'un niveau de hiérarchie juste supérieur.

De manière générale, pour un réseau à N niveaux de hiérarchie, l'identificateur est un code à N - 1 mots. Le J^{ième} mot différentie chaque étage de concentration de niveau J relié à un même étage de concentration de niveau J + 1.

A titre d'exemple, on peut voir, sur la Fig. 2, la mise en application de ce procédé dans le cas d'un réseau à trois étages de concentration.

Pour attribuer l'identificateur VPI aux cellules usager en phase de macrodiversité, on peut alors appliquer le procédé suivant :
1) Si l'identificateur VPI reçu par une borne est identique à celui qui est attribué à l'étage de concentration auquel elle est reliée, l'équipement serveur OPM commun le plus proche est celui qui correspond au premier niveau hiérarchique, c'est-à-dire dans l'exemple mentionné ci-dessus, VPI = 60.
2) Si l'identificateur VPI reçu diffère par le chiffre ou le mot des unités, l'équipement serveur OPM commun le plus proche est celui qui correspond au second niveau hiérarchique, c'est-à-dire dans l'exemple mentionné ci-dessus, VPI = 70.
3) Si l'identificateur VPI diffère par le chiffre ou le mot des dizaines, l'équipement serveur OPM commun le plus proche est celui de troisième niveau hiérarchique, c'est-à-dire VPI = 80.

On notera que, pour pouvoir mettre en oeuvre le procédé décrit ci-dessus, il suffit que les numéros, chiffres ou mots différentient chaque étage de concentration de même niveau.

De manière générale, si l'identificateur VPI diffère par le N^{iéme} chiffre ou mot, l'équipement serveur OPM commun le plus proche est celui de niveau N + 1, étant entendu que N = 0 lorsque les deux identificateurs VPI sont égaux.

Dans la pratique, on peut opérer de la manière suivante. L'ancienne borne valide l'indicateur M dès qu'elle aura reçu le message de demande du contexte provenant de la nouvelle borne. Alors, à cet instant, les cellules émises par le mobile transitent par un des équipement serveur OPM du réseau de la manière qui est indiqué ci-dessus. Néanmoins, l'équipement serveur OPM considéré ne recevra à ce moment qu'un unique flux provenant du mobile.

Quant à la nouvelle borne, elle valide l'indicateur M dès que le marquage de la connexion sur elle aura été effectué. Ceci démarre réellement la phase de macrodiversité. Comme il a été expliqué ci-dessus, les flux de cellules usager issus respectivement des anciennes et nouvelles bornes transitent alors par un unique équipement serveur OPM du réseau où ils ressortiront en un unique flux filtré.

La fin de la phase de macrodiversité sera déterminée par le mobile lorsque ce dernier achèvera la phase de hand-over et abandonnera une des deux bornes, généralement l'ancienne borne. Il effacera en même temps l'indicateur M. Les bornes répercuteront cette suppression de M sur les en-têtes des cellules ATM en affectant de nouveau au couple d'identificateurs VPI/VCI la valeur normale hors-macrodiversité, c'est-à-dire 50/100 pour l'exemple décrit ci-dessus.

On notera que l'activation d'un équipement serveur OPM pour une connexion donnée doit être effectuée avant que le flux usager ne soit émis par la nouvelle borne. On évite ainsi le risque que deux flux d'une même communication puissent être émis sans contrôle de la macrodiversité, entraînant alors des dégradations de la qualité de la communication.

De même, il est indispensable que la commande de désactivation soit effectuée après que le flux usager ait été coupé sur l'ancienne borne.

Il résulte de ceci que les équipements serveurs OPM doivent être capables de fonctionner normalement en présence d'un unique flux usager provenant d'un mobile.

Le procédé décrit concerne une architecture à trois niveaux hiérarchiques mais on comprendra qu'il est transposable pour des architectures de réseau plus simples, par exemple à 2 niveaux hiérarchiques et ne comprenant qu'un seul équipement serveur OPM.

On notera que face aux techniques de commande d'activation/désactivation par protocoles spécifiques, le procédé de l'invention présente des avantages sur les plans performances et fiabilité.

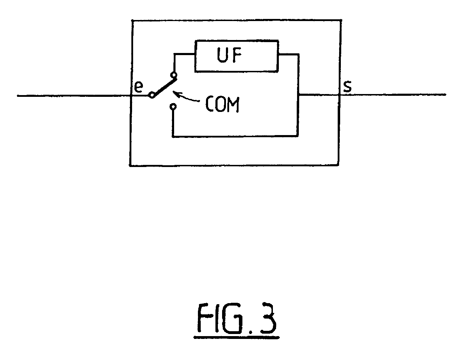

La présente invention s'applique également à des équipements serveurs OPM qui sont dits à entité de commutation. On a représenté un tel opérateur à la Fig. 3. Il est pourvu d'une entrée e et d'une sortie s entre lesquelles on trouve un commutateur COM et une unité fonctionnelle UF, ici de traitement de la macrodiversité.

Le fonctionnement d'un tel équipement serveur OPM dans le cadre de la présente invention est le suivant. Un identificateur de conduit virtuel VPI est affecté à cet équipement serveur OPM. Tant que les cellules usager qui sont présentes à l'entrée e portent un identificateur de conduit virtuel VPI différent de celui qui est affecté à l'équipement serveur OPM, le commutateur COM est positionné de manière que l'entrée e soit reliée à la sortie s, si bien que lesdites cellules se retrouvent à la sortie s.

Lorsque lesdites cellules portent l'identificateur de conduit virtuel correspondant à celui qui est affecté à l'équipement serveur OPM, le commutateur COM les aiguille vers l'unité fonctionnelle UF. Après traitement, les cellules sont dirigées vers la sortie s de l'équipement serveur OPM.

En plus de ce traitement, l'identificateur de conduit virtuel des cellules usager est traduit en la valeur généralement affectée aux cellules qui ne subissent pas de traitement de macrodiversité, par exemple VPI = 50.

En phase de macrodiversité, deux flux usager sont dirigés vers l'unité fonctionnelle UF. Celui qui présente la qualité la meilleure est seul présent à la sortie de l'unité fonctionnelle UF.

On a représenté à la Fig.4 un réseau local d'accès à des mobiles qui est équipé d'équipements serveurs OPM-a à OPM-z du type à entité de commutation. On peut constater que chaque équipement serveur OPM est connecté en coupure d'un multiplex entre un étage de concentration d'un premier niveau de hiérarchie et un autre étage de concentration du niveau juste supérieur. On comprendra que l'invention s'applique pareillement à un tel réseau en recherchant, pendant les phases de hand-over, l'équipement serveur OPM qui est le plus proche commun aux deux bornes auxquelles est rattaché le mobile. Ici, l'équipement serveur OPM considéré n'est pas celui qui est relié en dérivation sur un étage de concentration, comme dans le premier mode de réalisation de l'invention, mais l'équipement serveur OPM qui est en coupure du multiplex relié à la sortie dudit étage de concentration.

On notera que la fonction réellement réalisée par un équipement serveur OPM est sans importance d'un point de vue du concept de l'invention et qu'ainsi l'invention s'applique également à tout type de serveurs pouvant traiter simultanément deux flux issus d'un même mobile rattaché à deux bornes distinctes.

## Revendications

1. Procédé d'aiguillage vers un équipement serveur des cellules émises par un mobile lorsque celui-ci se trouve rattaché à deux bornes d'un réseau local d'accès à des mobiles, ledit équipement serveur filtrant les flux de cellules issus dudit mobile via respectivement lesdites deux bornes et n'en conservant qu'un seul, ledit réseau étant constitué d'une pluralité d'étages de concentration et de bornes reliées aux étages de concentration de bas niveau, ledit réseau comportant des équipements serveurs respectivement reliés à des étages de concentration, **caractérisé en ce qu'**il consiste à établir initialement des canaux virtuels permanents en direction des équipements serveurs et, lorsqu'un mobile se trouve rattaché à deux bornes dudit réseau, lesdites deux bornes déterminent l'équipement serveur commun le plus proche et modifient l'en-tête des cellules usager émises par ledit mobile de manière à ce qu'elles portent l'identificateur VPI/VCI du canal établi pour ledit équipement serveur de manière à pouvoir y être traitée, ledit équipement traduisant de nouveau l'identificateur VPI des cellules du flux conservé de manière qu'il soit égal à celui affecté aux cellules usager.

2. Procédé d'aiguillage selon la revendication 1, lesdits équipements serveurs étant respectivement reliés en dérivation sur des étages de concentration, **caractérisé en ce qu'**il consiste à établir initialement lesdits canaux virtuels permanents vers les équipements serveurs dans les étages de concentration auxquels sont reliés lesdits équipements serveurs.

3. Procédé d'aiguillage selon la revendication 1, lesdits équipements serveurs étant respectivement reliés en coupure des multiplex en sortie d'étages de concentration, **caractérisé en ce qu'**il consiste à établir initialement, dans chacun desdits équipements serveurs, un canal virtuel permanent vers une unité fonctionnelle dudit équipement serveur et, lorsque ledit mobile se trouve rattaché à deux bornes dudit réseau, lesdites deux bornes déterminent l'équipement serveur commun le plus proche et modifient l'en-tête des cellules de manière à ce qu'elles portent l'identificateur VPI/VCI du canal établi vers ladite unité fonctionnelle dudit équipement serveur.

4. Procédé d'aiguillage selon une des revendications précédentes, **caractérisé en ce qu'**il consiste à établir un canal virtuel à chacun desdits niveaux hiérarchiques desdits étages de concentration auxquels sont reliés lesdits équipement serveurs.

5. Procédé d'aiguillage selon une des revendications 1 à 4, **caractérisé en ce que** pour déterminer l'équipement serveur commun le plus proche, chaque borne à laquelle est rattaché ledit mobile échange des informations de dialogue avec l'autre borne, lesdites informations étant relatives à la localisation relative desdites deux bornes dans ledit réseau local.

6. Procédé d'aiguillage selon la revendication 5, **caractérisé en ce que** chaque borne émet lesdites informations de dialogue en direction de l'autre borne sur un canal de signalisation permanent qui lui est spécifique, ladite autre borne déterminant la localisation de ladite borne en considérant l'identificateur dudit canal porté par les cellules émises par ladite borne.

7. Procédé d'aiguillage selon la revendication 6, **caractérisé en ce que** le canal de signalisation permanent associé à chaque borne pour l'émission desdites informations de dialogue porte un identificateur constitué d'un code à N - 1 mots, N étant le nombre des niveaux de hiérarchie des étages de concentration du réseau, le J^{ième} mot différentiant chaque étage de concentration de niveau J relié à un même étage de concentration de niveau J + 1.

8. Procédé d'aiguillage selon la revendication 7, **caractérisé en ce que** pour déterminer l'équipement serveur le plus proche, chaque borne compare l'identificateur du canal de signalisation qui lui est attribué et l'identificateur du canal de signalisation sur lequel elle a reçu lesdites informations de l'autre borne, détermine le mot qui les différentie et si celui-ci est le n^{ième}, détermine l'équipement serveur le plus proche comme étant celui qui est lié à l'étage de concentration de niveau n + 1.

9. Procédé d'aiguillage selon la revendication 5, **caractérisé en ce que** chaque borne à laquelle est rattaché ledit mobile utilise une table pour déterminer, à partir des informations relatives à la localisation desdites deux bornes, l'équipement serveur le plus proche.

10. Procédé d'aiguillage selon une des revendications précédentes, **caractérisé en ce qu'**à partir du moment où le mobile est rattaché à deux bornes jusqu'au moment où il est de nouveau rattaché à une seule borne, ledit mobile insère dans l'en-tête des cellules usager qu'il émet un indicateur, et lesdites bornes auxquelles il est rattaché modifient l'en-tête desdites cellules seulement lorsque lesdites cellules portent ledit indicateur.

11. Procédé d'aiguillage selon la revendication 10, **caractérisé en ce que** l'ancienne borne modifie l'en-tête desdites cellules seulement dès lors qu'elle a reçu de la nouvelle borne le message concernant lesdites informations de dialogue.

12. Procédé d'aiguillage selon la revendication 10 ou 11, **caractérisé en ce que** la nouvelle borne modifie l'en-tête desdites cellules seulement dès lors que la connexion sur elle aura été effectuée.

13. Réseau local d'accès à des mobiles du type qui est constitué d'une pluralité d'étages de concentration et de bornes (A, B, C, D) reliées aux étages de concentration de bas niveau de hiérarchie, ledit réseau comportant des équipements serveurs (OPM) respectivement reliés à des étages de concentration, lesdits équipements serveurs étant prévus pour filtrer les flux de cellules issus dudit mobile via respectivement lesdites deux bornes et n'en conserver qu'un seul, ledit réseau comportant des moyens (CTR) pour aiguiller vers un équipement serveur les cellules qui sont émises par un mobile lorsque celui-ci se trouve rattaché à deux bornes, **caractérisé en ce qu'**il comporte des moyens pour établir initialement des canaux virtuels permanents en direction des équipements serveurs et des moyens pour que lesdites deux bornes puissent déterminer, lorsqu'un mobile se trouve rattaché à deux bornes dudit réseau, l'équipement serveur commun le plus proche et pour modifier l'en-tête des cellules usager émises par ledit mobile de manière à ce qu'elles portent l'identificateur VPI/VCI du canal établi pour ledit équipement serveur de manière à pouvoir y être traitée, lesdits équipements étant prévus pour traduire l'identificateur VPI des cellules du flux conservé de manière qu'il soit égal à celui affecté aux cellules usager.

14. Réseau selon la revendication 13, **caractérisé en ce que** lesdits équipements serveurs sont respectivement reliés en dérivation sur des étages de concentration et **en ce qu'**il est prévu pour établir initialement lesdits canaux virtuels permanents vers les équipements serveurs dans les étages de concentration auxquels ces derniers sont reliés.

15. Réseau selon la revendication 13, **caractérisé en ce que** lesdits équipements serveurs sont respectivement reliés en coupure des multiplex en sortie d'étages de concentration et **en ce qu'**il comporte des moyens pour établir initialement, dans chacun desdits équipements serveurs, un canal virtuel permanent vers une unité fonctionnelle dudit équipement serveur et des moyens pour déterminer, lorsque ledit mobile se trouve rattaché à deux bornes dudit réseau, l'équipement serveur commun le plus proche et pour modifier l'en-tête des cellules de manière à ce qu'elles portent l'identificateur VPI/VCI du canal établi vers ladite unité fonctionnelle dudit équipement serveur.

16. Réseau selon une des revendications 13 à 15, chaque borne est prévue pour échanger avec toute autre borne dudit réseau des informations de dialogue relatives à la localisation relative desdites deux bornes dans ledit réseau local.

17. Réseau selon une des revendications 16, **caractérisé en ce que** chaque borne est pourvue d'une table pour pouvoir déterminer, à partir desdites informations reçues d'une autre borne, l'équipement serveur le plus proche.

## Patentansprüche

1. Verfahren zur Führung von Zellen zu einer Servereinrichtung, die von einem mobilen Teilnehmer gesendet werden, wenn dieser mit zwei Anschlüssen eines lokalen Netzwerks mit Zugang zu mobilen Teilnehmern verbunden ist, wobei die Servereinrichtung die von dem mobilen Teilnehmer stammenden Zellströme jeweils über die beiden Anschlüsse filtert und davon nur einen behält, wobei das Netzwerk aus einer Vielzahl von Konzentrationsstufen und Anschlüssen besteht, die mit den niederrangigen Konzentrationsstufen verbunden sind, wobei das Netzwerk Servereinrichtungen umfasst, die jeweils mit Konzentrationsstufen verbunden sind, **dadurch gekennzeichnet, dass** es darin besteht, ursprünglich feste virtuelle Kanäle in Richtung zu den Servereinrichtungen aufzubauen, und dann, wenn ein mobiler Teilnehmer mit zwei Anschlüssen des Netzwerkes verbunden ist, die beiden Anschlüsse die nächste gemeinsame Servereinrichtung bestimmen und den Anfangsblock der von dem mobilen Teilnehmer gesendeten Benutzerzellen derart ändern, dass sie den VPI/VCI-ldentifikator des für die Servereinrichtung aufgebauten Kanals tragen, um darin bearbeitet zu werden, wobei die Einrichtung den VPI-Identifikator der Zellen des behaltenen Stroms wieder derart übersetzt, dass er dem den Benutzerzellen zugewiesenen Identifikator entspricht.

2. Verfahren zur Führung nach Anspruch 1, wobei die Servereinrichtungen jeweils nebeneinander mit den Konzentrationsstufen verbunden sind, **da** durch gekennzeichnet, dass es darin besteht, ursprünglich die festen virtuellen Kanäle zu den Servereinrichtungen in den Konzentrationsstufen aufzubauen, mit denen die Servereinrichtungen verbunden sind.

3. Verfahren zur Führung nach Anspruch 1, wobei die Servereinrichtungen jeweils die Multiplexe unterbrechend am Ausgang der Konzentrationsstufen verbunden sind, **dadurch gekennzeichnet, dass** es darin besteht, ursprünglich in jeder der Servereinrichtungen einen festen virtuellen Kanal zu einer Funktionseinheit der Servereinrichtung aufzubauen, und dann, wenn der mobile Teilnehmer mit zwei Anschlüssen des Netzwerkes verbunden ist, die beiden Anschlüsse die nächste gemeinsame Servereinrichtung bestimmen und den Anfangsblock der Zellen derart ändern, dass sie den VPI/VCI-Identifikator des zu der Funktionseinheit der Servereinrichtung aufgebauten Kanals tragen.

4. Verfahren zur Führung nach einer der vorhergehenden Ansprüche, **dadurch gekennzeichnet, dass** es darin besteht, einen virtuellen Kanal auf jeder der Hierarchiestufen der Konzentrationsstufen, mit denen die Servereinrichtungen verbunden sind, aufzubauen.

5. Verfahren zur Führung nach einem der Ansprüche 1 bis 4, **dadurch gekennzeichnet, dass** zum Bestimmen der nächsten gemeinsamen Servereinrichtung jeder Anschluss, mit dem der mobile Teilnehmer verbunden ist, Dialoginformationen mit dem anderen Anschluss austauscht, wobei die Informationen die Lokalisierung im Verhältnis zu den beiden Anschlüssen in dem lokalen Netzwerk betreffen.

6. Verfahren zur Führung nach Anspruch 5, **dadurch gekennzeichnet, dass** jeder Anschluss die Dialoginformationen in Richtung zu dem anderen Anschluss auf einem für ihn spezifischen, festen Signalisierungskanal sendet, wobei der andere Anschluss die Lokalisierung des Anschlusses unter Berücksichtigung des Kanalidentifikators, der von den Zellen getragen wird, die von dem Anschluss gesendet werden, bestimmt.

7. Verfahren zur Führung nach Anspruch 6, **dadurch gekennzeichnet, dass** der feste Signalisierungskanal, der mit jedem Anschluss zum Senden der Dialoginformationen verknüpft ist, einen Identifikator trägt, der aus einem Code aus N-1 Wörtern besteht, wobei N die Anzahl der Hierarchiestufen der Netzwerkkonzentrationsstufen ist, wobei das j-te Wort jede J-rangige Konzentrationsstufe unterscheidet, die mit einer gleichen J+1-rangigen Konzentrationsstufe verbunden ist.

8. Verfahren zur Führung nach Anspruch 7, **dadurch gekennzeichnet, dass** zum Bestimmen der nächsten Servereinrichtung jeder Anschluss den Identifikator des Signalisierungskanals, der ihm zugewiesen ist, und den Identifikator des Signalisierungskanals, auf dem er die Informationen des anderen Anschlusses erhalten hat, vergleicht, das Wort bestimmt, das sie unterscheidet, und wenn dieses das n-te ist, die nächste Servereinrichtung als diejenige bestimmt, die mit der n+1-rangigen Konzentrationsstufe verknüpft ist.

9. Verfahren zur Führung nach Anspruch 5, **dadurch gekennzeichnet, dass** jeder Anschluss, mit dem der mobile Teilnehmer verbunden ist, eine Tabelle verwendet, um ausgehend von Informationen über die Lokalisierung der beiden Anschlüsse die nächste Servereinrichtung zu bestimmen.

10. Verfahren zur Führung nach einem der vorhergehenden Ansprüche, **dadurch gekennzeichnet, dass** von dem Zeitpunkt, zu dem der mobile Teilnehmer mit den beiden Anschlüssen verbunden wird, bis zu dem Zeitpunkt, zu dem er wieder mit einem einzelnen Anschluss verbunden wird, der mobile Teilnehmer Benutzerzellen in den Anfangsblock einfügt, dass er einen Identifikator sendet, und die Anschlüsse, mit denen er verbunden ist, den Anfangsblock der Zellen nur ändern, wenn die Zellen den Identifikator tragen.

11. Verfahren zur Führung nach Anspruch 10, **dadurch gekennzeichnet, dass** der frühere Anschluss den Anfangsblock der Zellen nur ändert, nachdem er von dem neuen Anschluss die Nachricht bezüglich der Dialoginformationen erhalten hat.

12. Verfahren zur Führung nach Anspruch 10 oder 11, **dadurch gekennzeichnet, dass** der neue Anschluss den Anfangsblock der Zellen nur ändert, nachdem die Verbindung damit vorgenommen wurde.

13. Lokales Netzwerk mit Zugang zu mobilen Teilnehmern von der Art, die aus einer Vielzahl von Konzentrationsstufen und Anschlüssen (A, B, C, D) besteht, die mit den Konzentrationsstufen einer niedrigen Hierarchiestufe verbunden sind, wobei das Netzwerk Servereinrichtungen (OPH) umfasst, die jeweils mit Konzentrationsstufen verbunden sind, wobei die Servereinrichtungen vorgesehen sind, um die von dem mobilen Teilnehmer stammenden Zellströme jeweils über die beiden Anschlüsse zu filtern und nur einen davon zu behalten, wobei das Netzwerk Mittel (CTR) umfasst, um die Zellen zu einer Servereinrichtung zu führen, die von einem mobilen Teilnehmer gesendet werden, wenn dieser mit zwei Anschlüssen verbunden ist, **dadurch gekennzeichnet, dass** es Mittel umfaßt, um ursprünglich feste virtuelle Kanäle in Richtung zu Servereinrichtungen aufzubauen, und Mittel, damit die beiden Anschlüsse die nächste gemeinsame Servereinrichtung bestimmen können, wenn ein mobiler Teilnehmer mit zwei Anschlüssen des Netzwerks verbunden ist, und um den Anfangsblock der Benutzerzellen zu ändern, die von dem mobilen Teilnehmer derart gesendet werden, dass sie den VPI/VCI-Identifikator des für die Servereinrichtung aufgebauten Kanals tragen, damit sie darin bearbeitet werden können, wobei die Einrichtungen vorgesehen sind, um den VPI-ldentifikator der Zellen des behaltenen Stroms derart zu übersetzen, dass er dem den Benutzerzellen zugeordneten Identifikator entspricht.

14. Netzwerk nach Anspruch 13, **dadurch gekennzeichnet, dass** die Servereinrichtungen jeweils nebeneinander mit Konzentrationsstufen verbunden sind, und dass es vorgesehen ist, um ursprünglich die festen virtuellen Kanäle zu den Servereinrichtungen in den Konzentrationsstufen, mit denen letztere verbunden sind, aufzubauen.

15. Netzwerk nach Anspruch 13, **dadurch gekennzeichnet, dass** die Servereinrichtungen jeweils die Multiplexe unterbrechend am Ausgang der Konzentrationsstufen verbunden sind, und dass es Mittel umfaßt, um ursprünglich in jeder der Servereinrichtungen einen festen virtuellen Kanal zu einer Funktionseinheit der Servereinrichtung aufzubauen, und Mittel, um die nächste gemeinsame Servereinrichtung zu bestimmen, wenn der mobile Teilnehmer mit zwei Anschlüssen des Netzwerks verbunden ist, und um den Anfangsblock der Zellen derart zu ändern, dass er den VPI/VCI-Identifikator des zu der Funktionseinheit der Servereinrichtung aufgebauten Kanals trägt.

16. Netzwerk nach einem der Ansprüche 13 bis 15, wobei jeder Anschluss vorgesehen ist, um mit jedem beliebigen anderen Anschluss des Netzwerks Dialoginformationen über die Lokalisierung im Verhältnis zu den beiden Anschlüssen in dem lokalen Netzwerk auszutauschen.

17. Netzwerk nach Anspruch 16, **dadurch gekennzeichnet, dass** jeder Anschluss mit einer Tabelle vorgesehen ist, um ausgehend von Informationen, die von einem anderen Anschluss erhalten wurden, die nächste Servereinrichtung bestimmen zu können.

## Claims

1. Method of switching to a server device of the cells emitted by a mobile element when the latter is connected to two terminals of a local access network to mobile elements wherein the said server device filters the fluxes of cells emitted by the mobile elements via the said two terminals respectively and only retains one of them wherein the said network is constituted by a plurality of concentration stages and terminals connected to the low level concentration stages wherein the said network comprises server devices respectively connected to concentration stages, **characterised in that** it consists in initially establishing permanent virtual channels in the direction of the server devices and, if a mobile element is connected to two terminals of the said network, the said two terminals determine the nearest common server device and modify the header of the user cells emitted by the said mobile element in such a way that they have the VPI/VCI identifier of the channel established for the said server device so that it can be processed therein, wherein the said device translates once again the VPI identifier of the cells of the retained flux in such a way that it is equal to that assigned to the user cells.

2. Method of switching according to claim 1 wherein the said server devices are respectively connected branching out from the concentration stages, **characterised in that** it consists in initially establishing the said permanent virtual channels to the server devices in the concentration stages to which the said server devices are connected.

3. Method of switching according to claim 1 wherein the said server devices are respectively connected at the cut-off of the multiplexes at the concentration stage outlet, **characterised in that** it consists in initially establishing in each of the said server devices a permanent virtual channel to a functional unit of the said server device and when the said mobile element its connected to two terminals of the said network the said two terminals determine the nearest common server device and modify the header of the cells in such a way that they carry the VPI/VCI identifier of the channel established to the said functional unit of the said server device.

4. Switching method according to one of the preceding claims **characterised in that** it consists in establishing a virtual channel to each of the said hierarchical levels of the said concentration stages to which the said server devices are connected.

5. Switching method according to one of the claims 1 to 4 **characterised in that** for the purpose of determining the nearest common server device each terminal to which the said mobile element is attached exchanges dialogue information with the other terminal wherein the said information relates to the relative location of the said two terminals in the said local network.

6. Switching method according to claim 5 **characterised in that** each terminal emits the said dialogue information in the direction of the other terminal on a permanent signalling channel which is specific to it, wherein the said other terminal determines the location of the said terminal taking into consideration the identifier of the said channel carried by the cells emitted by the said terminal.

7. Switching method according to claim 6 **characterised in that** the permanent signalling channel associated with each terminal for the emission of the said dialogue information carries an identifier constituted by a code with N - 1 words, wherein N is the number of the hierarchical levels of the concentration stages of the network, wherein the J^{th} word differentiates each concentration stage of level J connected to an identical concentration stage of level J + 1.

8. Switching method according to claim 7 **characterised in that** for the purpose of determining the nearest server device each terminal compares the identifier of the signalling channel which is attributed to it and the identifier of the signalling channel on which it received the said information from the other terminal, determines the word which differentiates them and, if this is the n^{th}, determines the nearest server device as being that which is connected to the concentration stage of level n + 1.

9. Switching method according to claim 5 **characterised in that** each terminal to which the said mobile element is connected uses a table to determine the nearest server device on the basis of the information relating to the location of the said two terminals.

10. Switching method according to one of the preceding claims **characterised in that** from the moment when the mobile element is connected to two terminals until the moment when it is once again connected to a single terminal the said mobile element inserts in the header of the user cells that it emits an indicator and the said terminals to which it is connected modify the header of the said cells only when the said cells carry the said indicator.

11. Switching method according to claim 10 **characterised in that** the old terminal modifies the header of the said cells only when it has received the message concerning the said dialogue information from the new terminal.

12. Switching method according to claim 10 or 11 **characterised in that** the new terminal modifies the header of the said cells only when the connection to it has been realised.

13. Local access network to mobile elements of the type which is constituted by a plurality of concentration stages and terminals (A, B, C, D) connected to the low level hierarchical concentration stages, wherein the said network comprises server devices (OPM) respectively connected to concentration stages, wherein the said server devices are provided to filter the fluxes of cells emitted from the said mobile element respectively via the said two terminals and only retain one of them, wherein the said network comprises means (CTR) of switching to a server device the cells which are emitted by a mobile element when the latter is connected to two terminals, **characterised in that** it comprises means of initially establishing permanent virtual channels in the direction of the server devices and means so that the said two terminals can determine the nearest common server device when a mobile element is connected to two terminals of the said network and modify the header of the user cells emitted by the said mobile element in such a way that they carry the VPI/VCI identifier of the channel established for the said server device so that it can be processed therein, wherein the said devices are provided to translate the VPI identifier of the cells of the retained flux in such a way that it is equal to that assigned to the user cells.

14. Network according to claim 13 **characterised in that** the said server devices are respectively connected branching out from concentration stages and **in that** it is provided to initially establish the said permanent virtual channels to the server devices in the concentration stages to which the latter are connected.

15. Network according to claim 13 **characterised in that** the said server devices are respectively connected at the cut-off of the multiplexes at the outlet of concentration stages and **in that** it comprises means of initially establishing in each of the said server devices a permanent virtual channel to a functional unit of the said server device and means of determining the nearest common server device when the said mobile element is connected to two terminals of the said network and of modifying the header of the cells in such a way that they carry the VPI/VCI identifier of the channel established to the said functional unit of the said server device.

16. Network according to one of the claims 13 to 15, wherein each terminal is provided to exchange with any other terminal of the said network dialogue information relating to the relative location of the said two terminals in the said local network.

17. Network according to one of the claims 16 [sic], **characterised in that** each terminal is provided with a table in order to be able to determine the nearest server device on the basis of the said information received from another terminal.
